# EUROPEAN PATENT APPLICATION

(11) **EP 3 672 066 A1**
(43) Date of publication of application: **24.06.2020**
(21) Application number: 19758308.1
(22) Date of filing: 11.01.2019
(51) Int. Cl.: H02P 27/08, B25F 5/00, H02P 6/12

(54) **CONTROL CIRCUIT FOR ELECTRIC TOOL**

(30) Priority: 22.02.2018 JP 2018029904
(71) Applicant: Panasonic Intellectual Property Management Co., Ltd., Osaka-shi, Osaka 540-6207 (JP)
(72) Inventor: YONEDA, Fumiiki, Osaka-shi 540-6207 Osaka (JP); ESAKA, Koichiro, Osaka-shi 540-6207 Osaka (JP)
(74) Representative: Appelt, Christian W.
(86) International application number: PCT/JP2019/000729
(87) International publication number: WO 2019/163320

(57) **Abstract**

A control circuit for an electric tool according to the present invention, includes a permanent magnet synchronous motor, a plurality of switching elements, and a PWM inverter circuit that drives the permanent magnet synchronous motor. The control circuit includes current detecting means that detects a current flowing through the PWM inverter circuit. When braking the permanent magnet synchronous motor, the control circuit limits a current flowing through the permanent magnet synchronous motor and the PWM inverter circuit, to a predetermined current limit value. At the same time, by switching low-side switching elements or high-side switching elements of the PWM inverter circuit, the control circuit boosts an induced electromotive voltage of the permanent magnet synchronous motor, and regenerates a regenerative current to the battery.

## Description

### TECHNICAL FIELD

The present invention relates to a control circuit for an electric tool, for example, using a permanent magnet synchronous motor, to a control method of controlling an electric tool, and to an electric tool.

### BACKGROUND ART

Generally, an electric tool such as a drill driver and an impact tool performs braking when to be stopped to improve the operability and the responsiveness thereof.

Patent Document 1 provided as an example, discloses an electric tool using a three-phase brushless motor as a drive source. A so-called short-circuit braking has been proposed that, upon reducing or stopping the rotation of the three-phase brushless motor, generates a braking force by short-circuiting between the terminals of the three-phase brushless motor.

In Patent Document 2, a braking apparatus for an electric tool has been proposed that can flow the braking currents through diodes connected in parallel to switching elements, and further, switches over from an ON-state to an OFF-state in the switching elements at the timings in a decreasing direction of the braking current flowing through the switching elements.

### PRIOR ART DOCUMENTS

### PATENT DOCUMENTS

[Patent Document 1] Japanese patent examined publication No. JPH06-104000B2;and
[Patent Document 2] Japanese Patent No. JP6155175B2.

### SUMMARY OF THE INVENTION

### PROBLEMS TO BE SOLVED BY THE INVENTION

However, the methods of Patent Documents 1 and 2 have the following problems:
(1) the currents flowing through the switching elements during braking cannot be controlled, and the switching elements may be broken.
(2) the elements each having a large current rating are required in accordance with the maximum currents flowing during braking;
(3) it takes a long time to perform braking since the inertial energy at the time of the tool rotation is consumed by mainly only in the electrical resistances of the motor windings, and this leads to a high heat generation of the motor; and
(4) the braking force and the braking time, etc. cannot be controlled.

An object of the present invention is to solve the above problems, and to provide a control circuit for an electric tool and a control method for an electric tool, and an electric tool, which are cheaper and more reliable than those of the prior art.

### MEANS FOR SOLVING THE PROBLEMS

According to the first aspect of the present invention, there is provided a control circuit for an electric tool. The electric tool includes a permanent magnet synchronous motor, a plurality of switching elements, and a PWM inverter circuit that drives the permanent magnet synchronous motor. The control circuit includes current detecting means that detects a current flowing through the PWM inverter circuit. When braking the permanent magnet synchronous motor, the control circuit limits a current flowing through the permanent magnet synchronous motor and the PWM inverter circuit, to a predetermined current limit value.

In the above-mentioned control circuit for the electric tool, the PWM inverter circuit is provided between the permanent magnet synchronous motor and a battery. The control circuit boosts an induced electromotive voltage of the permanent magnet synchronous motor by switching low-side switching elements or high-side switching elements of the PWM inverter circuit during braking of the permanent magnet synchronous motor, and regenerates a regenerative current to the battery.

In the above-mentioned control circuit for the electric tool, the control circuit changes the current limit value according to an operation mode of the electric tool.

According to the second aspect of the present invention, there is provided a control method for controlling an electric tool. The control method is executed by a control circuit for the electric tool, and the electric tool includes a permanent magnet synchronous motor, a plurality of switching elements, and a PWM inverter circuit that drives the permanent magnet synchronous motor. The control method includes:
a current detecting step of detecting a current flowing through the PWM inverter circuit by the control circuit; and
a current limiting step of limiting a current flowing through the permanent magnet synchronous motor and the respective switching elements of the PWM inverter circuit, to a predetermined current limit value during braking of the permanent magnet synchronous motor by the control circuit.

According to the third aspect of the present invention, there is provided an electric tool including a battery, a permanent magnet synchronous motor, a plurality of switching elements, and a PWM inverter circuit that drives the permanent magnet synchronous motor. The electric tool includes the above-mentioned control circuit for the electric tool.

### EFFECTS OF THE INVENTION

Therefore, according to the control circuit and control method for the electric tool according to the present invention, by controlling the element currents during braking, the element cost can be reduced, and the reliability of the tool can be improved. In addition, a regenerative current of an inertial energy is regenerated to a rechargeable battery 5, and then, it is possible to shorten the braking time. In addition, the heat generation of the motor can be reduced, and this leads to extending of even continuous use time of the tool.

### BERIEF DESCRIPTION OF THE DRWAINGS

Fig. 1 is a block diagram illustrating a configuration example of an electric tool according to an embodiment of the present invention.
Fig. 2 is a block diagram illustrating a detailed configuration example 1 of a PWM inverter circuit 2 of Fig. 1.
Fig. 3 is a block diagram illustrating a detailed configuration example 2 of the PWM inverter circuit 2 of Fig. 1.
Fig. 4 is a table illustrating a commutation pattern example 1 for the PWM inverter circuit 2 in a normal operation mode and a braking operation mode, which is performed by a motor control apparatus 10 of Fig. 1.
Fig. 5 is a table illustrating a commutation pattern example 2 for the PWM inverter circuit 2 in a normal operation mode and a braking operation mode, which is performed by a motor control apparatus 10 of Fig. 1.
Fig. 6 shows simulation results of the electric tool of Fig. 1, and is a timing chart showing (a) gate control signals, (b) a number of motor rotations, (c) detected values Imval of motor currents and a battery regenerative current Ib, (d) motor currents Iu, Iv and Iw, and (e) a battery voltage Vdc.

### BEST MODE FOR CARRYING OUT THE INVENTION

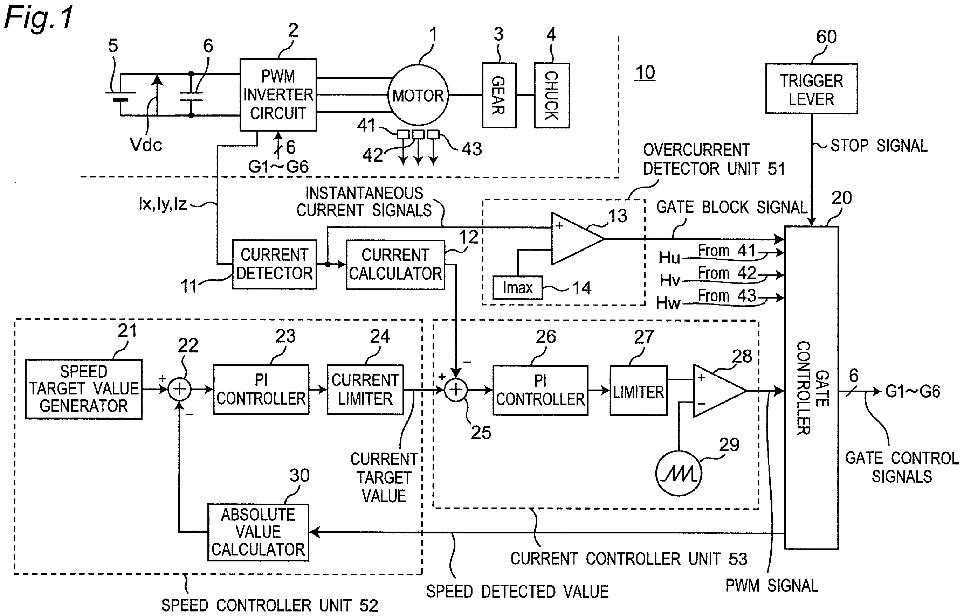

Fig. 1 is a block diagram illustrating a configuration example of an electric tool according to an embodiment of the present invention. Referring to Fig 1, the electric tool according to the embodiment is configured to include a motor 1 which is, for example, a permanent magnet synchronous motor, a PWM inverter circuit 2, a gear 3, a chuck 4, a rechargeable battery 5, a capacitor 6, and a motor control apparatus 10. In this case, the motor control apparatus 10 is configured to include a current detector 11, a current calculator 12, an overcurrent detector unit 51, a speed controller unit 52, a current controller unit 53, and a gate controller 20.

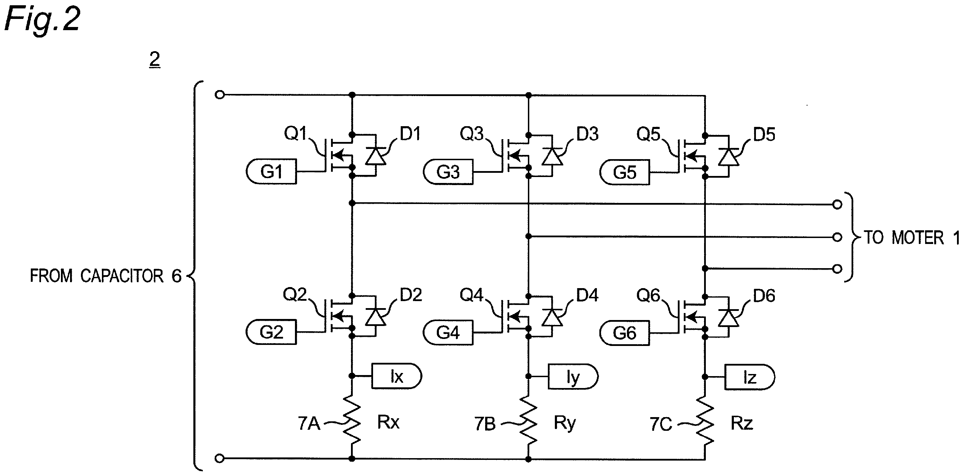

Fig. 2 is a block diagram illustrating a detailed configuration example 1 of the PWM inverter circuit 2 of Fig. 1. Referring to Fig. 2, the PWM inverter circuit 2 is configured to include six switching elements Q1 to Q6 such as MOSFETs, and three current detection resisters 7A, 7B, and 7C (having resistances Rx, Ry, and Rz). The voltages across the current detection resisters 7A, 7B, and 7C are inputted to the current detector 11 of Fig. 1, and are converted into current values flowing through respective phases of the PWM inverter circuit 2. Further, gate control signals G1 to G6 from the gate controller 20 of Fig. 1 are applied to the gates of the respective switching elements Q1 to Q6. Diodes D1 to D6 connected in reverse parallel to the respective switching elements Q1 to Q6 are, for example, parasitic diodes of the respective switching elements Q1 to Q6.

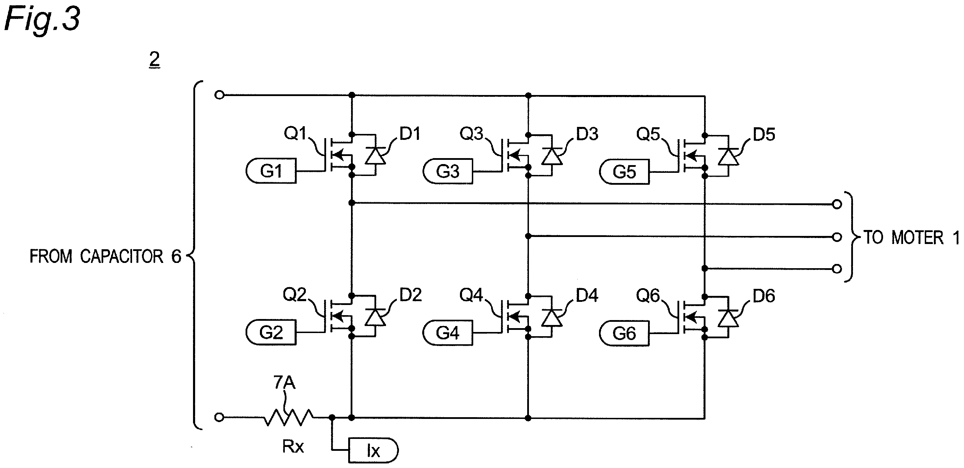

It is noted that, the embodiment of the PWM inverter circuit 2 of Fig. 2 has a so-called three-shunt three-phase PWM bridge form. However, the present invention is not limited to this, and can be applied to the PWM inverter circuit 2 having one-shunt three-phase PWM bridge form, that detects a current at the DC side by using one current detection resistor as shown in Fig. 3. In detailed configuration example 2 of Fig. 3, when the peak value of the current flowing through the current detection resistor 7A is detected, the element currents of the switching elements detects the average value of the current flowing through the current detection resistor 7A, and then, a battery current can be obtained.

In the motor control apparatus 10 according to the present embodiment, the instantaneous current of the current supplied to the PWM inverter circuit 2 and a predetermined calculated current are detected, and then, the switching elements Q1 to Q6, the circuits and the rechargeable battery are protected. The concrete details will be described later.

Referring to Fig. 1, the DC voltage from the rechargeable battery 5 is supplied to the PWM inverter circuit 2 via the capacitor 6. The PWM inverter circuit 2 PWM-modulates the supplied DC voltage according to the six gate control signals G1 to G6 from the gate controller 20, and the PWM-modulated voltage is converted into an AC (Alternate Current) voltage, which is outputted to the motor 1. In this case, the rotation of the motor 1 is transferred via the gear 3 to the chuck 4 of the electric tool. The gate controller 20 generates a speed detected value and the gate control signals G1 to G6 based on motor rotation positional signals Hu, Hv and Hw from Hall elements 41 to 43 mounted on the motor 1, the PWM signal from the current controller unit 53, and a gate block signal from the overcurrent detector unit 51.

The voltages detected by the current detection resistors 7A, 7B, and 7C are outputted to the current detector 11, which converts the detected voltages into corresponding current values Ix, Iy and Iz, and outputs the current values Ix, Iy and Iz to non-inverted input terminals of the comparator 13 and the current calculator 12. The current calculator 12, for example, performs a smoothing process on the vicinities of the peaks of the currents Ix, Iy and Iz flowing through the respective phases of the PWM inverter circuit 2, and outputs the processed currents to the subtractor 25.

The overcurrent detector unit 51 is configured to include the comparator 13 and a maximum current signal generator 14. The comparator 13 compares each of instantaneous current signals from the current detector 11 with the maximum current value from the maximum current signal generator 14, generates the gate block signal based on the comparison results, and outputs the same gate block signal to the gate controller 20. When the instantaneous current exceeds the maximum current value, the gate controller 20 soon stops the driving of the PWM inverter circuit 2, to protect the switching elements Q1 to Q6.

The speed controller unit 52 is configured to include an absolute value calculator 30, a speed target value generator 21, a subtracter 22, a PI controller 23 that performs a proportional-integral control on the motor speed, and a current limiter 24. The absolute value calculator 30 calculates an absolute value of the speed detected value from the gate controller 20, and outputs the same absolute value of the speed detected value to the subtractor 22. The subtractor 22 subtracts the absolute value of the detected speed value from the target speed value from the target speed value generator 21, and outputs the result of the subtraction to the PI controller 23. Based on the inputted subtraction result, the PI controller 23 performs a proportional-integral control on the motor speed, to generate and output a current target value for the same control to the subtractor 25 via the current limiter 24. In this case, the current limiter 24 limits the current target value corresponding to the speed target value to within a predetermined value, thereby to prevent an overcurrent in advance and to protect the circuits and the rechargeable battery 5.

The current controller unit 53 is configured to include a subtractor 25, a PI controller 26, a limiter 27, a comparator 28, and a triangular wave generator 29. The subtractor 25 subtracts the average current signal from the current calculator 12, from the current target value signal indicating the current target value, to generate and output a signal of the current control value resulting from the subtraction to the PI controller 26. The PI controller 26 performs a proportional-integral control on the current control value to generate and output a control signal to the non-inverted input terminal of the comparator 28 via the limiter 27. In this case, the limiter 27 controls the amplitude value of the PWM signal outputted from the comparator 28 to be within a predetermined value. The comparator 28 compares the control signal from the limiter 27 with the triangular wave from the triangular wave generator 29, to generate and output a PWM signal for driving the motor 1 by the PWM modulation, to the gate controller 20.

The gate controller 20 generates the six gate control signals G1 to G6 based on the motor rotation positional signals from the Hall elements 41 to 43, the PWM signal, and the gate block signal, and outputs the same gate control signals G1 to G6 to the PWM inverter circuit 2, to control the operation of the PWM inverter circuit 2.

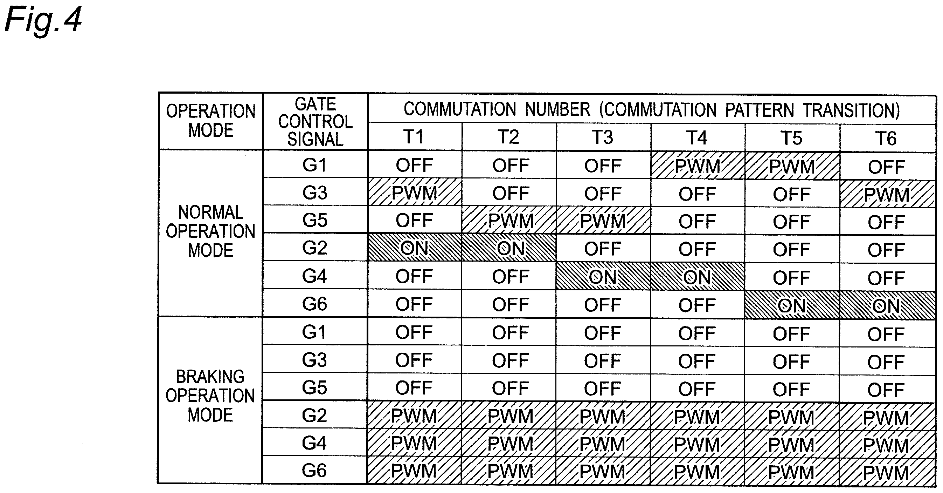

Fig. 4 is a table illustrating a commutation pattern example 1 for the PWM inverter circuit 2 in a normal operation mode and a braking operation mode, which is performed by the motor control apparatus 10 of Fig. 1.

Referring to Fig. 4, in the normal operation mode, the gate controller 20 sequentially and selectively turns on the switching elements Q2, Q4, and Q6 one by one, and PWM-modulates the gate control signals G1, G3, and G5 to the switching elements Q1, Q3, and Q5, with delay of half the period in synchronization to this turning-ON operation, to allow the motor 1 to rotate at a predetermined speed.

On the other hand, in the case of normally stopping the motor 1 by using an operation of the user such as returning the trigger lever 60, a stop signal is outputted from the trigger lever 60 to the gate controller 20. At that time, the gate controller 20 is immediately transferred from the normal operation mode to the braking operation mode, turns on the high-side switching elements Q1, Q3, and Q5, and PWM-modulates the gate control signals G2, G4, and G6 to the low-side switching elements Q2, Q4, and Q6, to reduce the motor speed at a predetermined speed with braking the motor 1, and then, stop the motor 1. At the same time, the gate controller 20 PWM-modulates the gate control signals G2, G4, and G6 to the low-side switching elements Q2, Q4, and Q6 so as to limit the currents flowing through the motor 1 and the switching elements Q2, Q4, and Q6 to a predetermined limit value, thereby to suppress the currents flowing through the switching elements Q2, Q4, and Q6 during braking.

In the present embodiment, the currents of the respective low-side switching elements Q2, Q4, and Q6 of the PWM inverter circuit 2 are detected, and then, upon the braking, the currents flowing through the motor 1 and the switching elements Q2, Q4, and Q6 are limited to a predetermined limit value. During the braking, the respective low-side switching elements Q2, Q4, and Q6 are switched to boost the induced electromotive voltage of the motor 1, and to regenerate a regenerative current to the rechargeable battery 5. Accordingly, as shown in Fig. 4, according to the usage state of the electric tool, the commutation patterns for the switching elements Q 1 to Q6 are switched over.

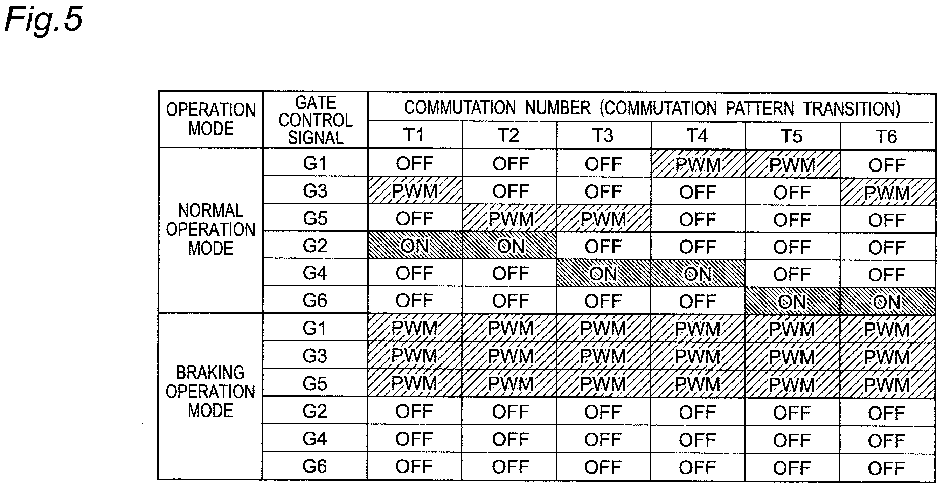

It is noted that, Fig. 4 shows one example of the commutation pattern, however, the present invention is not limited to this. For example, as shown in the commutation pattern example 2 of Fig. 5, the commutation pattern for the low-side switching elements Q2, Q4, and Q6 may be replaced with the commutation pattern for the high-side switching elements Q1, Q3, and Q5, so that in the braking operation mode, the low-side switching elements Q2, Q4, and Q6 may be turned off and the high-side switching elements Q1, Q3, and Q5 may be PWM-modulated.

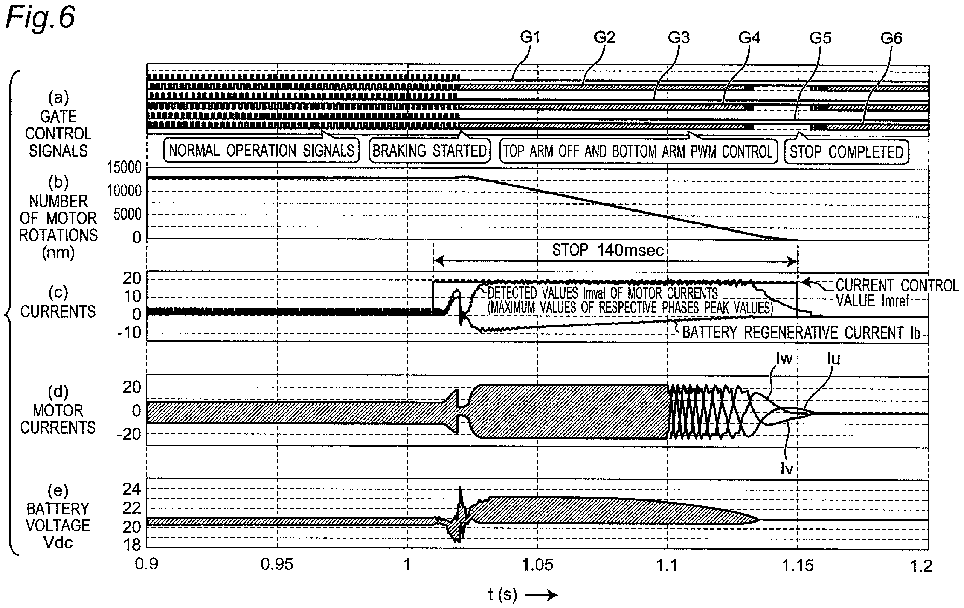

Fig. 6 shows simulation results of the electric tool of Fig. 1, and is a timing chart showing (a) the gate control signals, (b) a number of motor rotations, (c) the detected values Imval of motor currents and a battery regenerative current Ib, (d) motor currents Iu, Iv and Iw, and (e) a battery voltage Vdc. In Fig. 6, for convenience of illustration, the portions where the waveform changes in a complicated manner are represented by hatching.

The following can be clearly understood from Fig. 6:
during the braking, the speed of the motor 1 rotating at a constant speed in the normal operation can be reduced at a predetermined speed, and then, the motor 1 can be stopped;
the detected value Imval of the motor current during braking is limited to a predetermined current limit value Imref; and
the battery voltage Vdc increases during braking, the regenerative current Ib flows through the rechargeable battery 5, so that the inertial energy is regenerated and recharged to the rechargeable battery 5.

As described above, according to the present embodiment, the following specific effects are obtained:
(1) by controlling the currents of the switching elements Q1 to Q6 to be limited, the element cost can be reduced, and the reliability of the tool can be improved;
(2) the inertial energy is regenerated and recharged to the rechargeable battery 5, it is possible to shorten the braking time. In addition, the heat generation of the motor 1 can be reduced, and further, even continuous use time of the tool can be extended; and
(3) by changing the current limit value Imref according to the operation state of the electric tool, the tool can be protected and the operability can be improved.

In the above embodiments, for example, a rotary electric tool such as a drill driver is described. However, the present invention is not limited to this, and can be applied to impact-type electric tools.

In the above embodiments, the motor control apparatus 10 may be configured to mainly include hardware, or may be configured to mainly include software.

### EXPLNATION OF SYMBOLS

- 1: Motor
- 2: PWM inverter circuit
- 3: Gear
- 4: Chuck
- 5: Rechargeable battery
- 6: Capacitor
- 7A, 7B, and 7C: Current detection resistor
- 10: Motor control apparatus
- 11: Current detector
- 12: Current calculator
- 13: Comparator
- 14: Maximum current signal generator
- 20: Gate controller
- 21: Speed target value generator
- 22: Subtractor
- 23: PI controller
- 24: Current limiter
- 25: Subtractor
- 26: PI controller
- 27: Limiter
- 28: Comparator
- 29: Triangular wave generator
- 30: Absolute value calculator
- 41 to 43: Hall element
- 51: Overcurrent detector unit
- 52: Speed controller unit
- 53: Current controller unit
- 60: Trigger lever
- D1 to D6: Diode for blocking reverse current
- G1 to G6: Gate control signal
- Ix, Iy, and Iz: Detected current value
- Q1 to Q6: Switching element

## Claims

1. A control circuit for an electric tool, the electric tool comprising a permanent magnet synchronous motor, a plurality of switching elements, and a PWM inverter circuit that drives the permanent magnet synchronous motor,
wherein the control circuit comprises current detecting means that detects a current flowing through the PWM inverter circuit, and
wherein, when braking the permanent magnet synchronous motor, the control circuit limits a current flowing through the permanent magnet synchronous motor and the PWM inverter circuit, to a predetermined current limit value.

2. The control circuit for the electric tool as claimed in claim 1,
wherein the PWM inverter circuit is provided between the permanent magnet synchronous motor and a battery, and
wherein the control circuit boosts an induced electromotive voltage of the permanent magnet synchronous motor by switching low-side switching elements or high-side switching elements of the PWM inverter circuit during braking of the permanent magnet synchronous motor, and regenerates a regenerative current to the battery.

3. The control circuit for the electric tool as claimed in claim 1 or 2,
wherein the control circuit changes the current limit value according to an operation mode of the electric tool.

4. A control method for controlling an electric tool, the control method executed by a control circuit for the electric tool, the electric tool comprising a permanent magnet synchronous motor, a plurality of switching elements, and a PWM inverter circuit that drives the permanent magnet synchronous motor,
wherein the control method comprises:
a current detecting step of detecting a current flowing through the PWM inverter circuit by the control circuit; and
a current limiting step of limiting a current flowing through the permanent magnet synchronous motor and the respective switching elements of the PWM inverter circuit, to a predetermined current limit value during braking of the permanent magnet synchronous motor by the control circuit.

5. An electric tool comprising a battery, a permanent magnet synchronous motor, a plurality of switching elements, and a PWM inverter circuit that drives the permanent magnet synchronous motor,
wherein the electric tool comprises the control circuit for the electric tool, as claimed in any one of claims 1 to 3.
